# EUROPEAN PATENT APPLICATION

(11) **EP 4 219 392 A1**
(43) Date of publication of application: **02.08.2023**
(21) Application number: 21871949.0
(22) Date of filing: 15.07.2021
(51) Int. Cl.: C01B 3/00, C01B 3/56, H01M 8/04, H01M 8/0606, H01M 8/0662, C25B 13/02, C25B 1/02, C25B 15/08

(54) **ANODE SEPARATOR FOR ELECTROCHEMICAL HYDROGEN PUMP, AND ELECTROCHEMICAL HYDROGEN PUMP**

(30) Priority: 25.09.2020 JP 2020161295; 30.06.2021 JP 2021108547
(71) Applicant: Panasonic Intellectual Property Management Co., Ltd., Osaka-shi, Osaka 540-6207 (JP)
(72) Inventor: KITA, Hiromi, Osaka-shi, Osaka 540-6207 (JP); KAKUWA Takashi, Osaka-shi, Osaka 540-6207 (JP)
(74) Representative: Grünecker Patent- und Rechtsanwälte PartG mbB
(86) International application number: PCT/JP2021/026542
(87) International publication number: WO 2022/064817

(57) **Abstract**

An anode separator for use in an electrochemical hydrogen pump includes a first anode gas flow channel having a serpentine shape, a second anode gas flow channel having a serpentine shape, and an anode gas discharge manifold into which an anode gas discharged from each of the first anode gas flow channel and the second anode gas flow channel flow. The first anode gas flow channel and the second anode gas flow channel are provided in a first region and a second region, respectively, that are divided from each other by a predetermined line parallel to a direction of the anode gas that flows into the anode gas discharge manifold.

## Description

### Technical Field

The present disclosure relates to an anode separator for use in an electrochemical hydrogen pump and an electrochemical hydrogen pump.

### Background Art

In recent years, due to environmental problems such as global warming and energy problems such as depletion of oil resources, hydrogen has drawn attention as a clean alternative energy source that replaces fossil fuels. Hydrogen is expected to serve as clean energy, as it basically produces only water even at the time of combustion, does not discharge carbon dioxide, which is responsible for global warming, and hardly discharges nitrogen oxides or other substances. Further, as devices that utilize hydrogen as a fuel with high efficiency, fuel cells are being developed and becoming widespread for use in automotive power supplies and in-house power generation.

For example, for use as a fuel in a fuel-cell vehicle, hydrogen is in general compressed into a high-pressure state of several tens of megapascals and stored in an in-vehicle hydrogen tank. Moreover, such high-pressure hydrogen is obtained, in general, by compressing low-pressure (normal pressure) hydrogen with a mechanical compression apparatus.

Incidentally, in a hydrogen-based society to come, there is demand for technological development that makes it possible to, in addition to producing hydrogen, store hydrogen at high densities and transport or utilize hydrogen in small amounts and at low cost. In particular, hydrogen-supply infrastructures need to be built to expedite the widespread use of fuel cells, and for stable supply of hydrogen, various suggestions are made for the production, purification, and high-density storage of high-purity hydrogen.

Under such circumstances, for example, PTL 1 proposes an electrochemical hydrogen pump in which the purification and pressure rising of hydrogen in a hydrogen-containing gas are performed by applying a desired voltage between an anode and a cathode that are placed with an electrolyte membrane sandwiched therebetween. It should be noted that a stack of a cathode, an electrolyte membrane, and an anode is referred to as "membrane-electrode assembly" (hereinafter abbreviated as "MEA"). At this point in time, the hydrogen-containing gas that is supplied to the anode may have an impurity mixed therein. For example, the hydrogen-containing gas may be hydrogen gas secondarily produced from an iron-making factory or other places, or may be reformed gas produced by reforming city gas.

Further, for example, PTL 2 proposes a high-differential-pressure water electrolysis apparatus in which low-pressure hydrogen generated through the electrolysis of water is subjected to pressure rising using an MEA.

Further, for example, PTL 3 proposes an electrochemical hydrogen pump that makes it possible to improve hydrogen compression efficiency with an anode catalyst layer at least partially forming a mixed layer with an anode gas diffusion layer.

### Citation List

### Patent Literature

PTL 1: Japanese Unexamined Patent Application Publication No. 2015-117139
PTL 2: Japanese Patent No. 6382886
PTL 3: Japanese Unexamined Patent Application Publication No. 2019-163521

### Summary of Invention

### Technical Problem

The present disclosure has as an object, for example, to provide an anode separator for use in an electrochemical hydrogen pump that makes it possible to further improve efficiency in hydrogen compression operation of the electrochemical hydrogen pump than has conventionally been the case.

### Solution to Problem

In order to solve the aforementioned problem, an anode separator according to an aspect of the present disclosure for use in an electrochemical hydrogen pump is an anode separator made of metal for use in an electrochemical hydrogen pump, the anode separator including: a first anode gas flow channel having a serpentine shape; a second anode gas flow channel having a serpentine shape; and an anode gas discharge manifold into which an anode gas discharged from each of the first anode gas flow channel and the second anode gas flow channel flow, wherein the first anode gas flow channel and the second anode gas flow channel are provided in a first region and a second region, respectively, that are divided from each other by a predetermined line parallel to a direction of the anode gas that flows into the anode gas discharge manifold.

Further, an electrochemical hydrogen pump according to an aspect of the present disclosure includes an electrolyte membrane, an anode provided on a first principal surface of the electrolyte membrane, a cathode provided on a second principal surface of the electrolyte membrane, the anode separator provided on the anode, and a voltage applier that applies a voltage between the anode and the cathode. Compressed hydrogen is generated by using the voltage applier to apply a voltage to cause protons taken out from an anode gas supplied onto the anode to migrate onto the cathode via the electrolyte membrane.

### Advantageous Effects of Invention

The anode separator according to the aspect of the present disclosure for use in an electrochemical hydrogen pump can bring about an effect of making it possible to further improve efficiency in hydrogen compression operation of the electrochemical hydrogen pump than has conventionally been the case.

### Brief Description of Drawings

[Fig. 1A] Fig. 1A is a diagram showing an example of an electrochemical hydrogen pump according to an embodiment.
[Fig. 1B] Fig. 1B is an enlarged view of a part B of Fig. 1A.
[Fig. 2] Fig. 2 is a perspective view of examples of an anode separator and end plates for use in an electrochemical hydrogen pump according to an example of the embodiment.
[Fig. 3A] Fig. 3A is a plan view of the anode separator of Fig. 2.
[Fig. 3B] Fig. 3B is an enlarged view of a part B of Fig. 3A.
[Fig. 3C] Fig. 3C is an enlarged view of a part C of Fig. 3A.
[Fig. 3D] Fig. 3D is an enlarged view of a part D of Fig. 3A.

### Description of Embodiments

A study conducted on efficiency in hydrogen compression operation of an electrochemical hydrogen pump resulted in the following findings.

In an electrochemical hydrogen pump, an anode separator made of metal is used for securing the pressure resistance of an electrochemical cell. Examples of methods for forming an anode gas flow channel in a surface of an anode separator made of metal include grooving based on cutting of the anode separator and grooving based on etching of the anode separator. However, grooving based on cutting of a metallic material is higher in processing cost than grooving based on etching of a metallic material. For this reason, grooving the surface of the anode separator by etching is more desirable than grooving the surface of the anode separator by cutting from the point of view of reducing the processing cost of the anode separator. However, grooving the anode separator by etching in order to form an anode gas flow channel in the surface of the anode separator results in a shallower flow channel groove than grooving the anode separator by cutting. Then, an increase in pressure loss in the anode gas flow channel leads to a deterioration in efficiency of hydrogen compression operation of the electrochemical hydrogen pump.

To address this problem, an anode separator according to a first aspect of the present disclosure for use in an electrochemical hydrogen pump is an anode separator made of metal for use in an electrochemical hydrogen pump, the anode separator including: a first anode gas flow channel having a serpentine shape; a second anode gas flow channel having a serpentine shape; and an anode gas discharge manifold into which an anode gas discharged from each of the first anode gas flow channel and the second anode gas flow channel flow, wherein the first anode gas flow channel and the second anode gas flow channel are provided in a first region and a second region, respectively, that are divided from each other by a predetermined line parallel to a direction of the anode gas that flows into the anode gas discharge manifold.

According to such a configuration, the anode separator according to the present aspect for use in an electrochemical hydrogen pump makes it possible to further improve efficiency in hydrogen compression operation of the electrochemical hydrogen pump than has conventionally been the case. This is for the following reason.

First, the anode separator according to the present aspect for use in an electrochemical hydrogen pump is configured such that a first anode gas flow channel having a serpentine shape and a second anode gas flow channel having a serpentine shape are provided in a first region and a second region, respectively, that are divided from each other by a predetermined line parallel to a direction of an anode gas that flows into the anode gas discharge manifold (such a configuration being hereinafter referred to as "divided anode gas flow channel configuration").

Therefore, by employing the divided anode gas flow channel configuration, the anode separator according to the present aspect for use in an electrochemical hydrogen pump makes it possible to make the number of anode gas flow channels larger than in a case where such a divided configuration is not employed, thereby bringing about reductions in pressure loss in the anode gas flow channels. That is, by employing the foregoing divided anode gas flow channel configuration even in a case of grooving the anode separator by etching in order to form the anode gas flow channels in the surface of the anode separator, the anode separator according to the present aspect for use in an electrochemical hydrogen pump makes it possible to appropriately hold down increases in pressure loss in the anode gas flow channels.

For this reason, the anode separator according to the present aspect for use in an electrochemical hydrogen pump holds down increases in power consumption of the anode gas supply apparatus caused by increases in pressure loss in the anode gas flow channels. That is, a deterioration in efficiency of hydrogen compression operation of the electrochemical hydrogen pump is reduced.

Further, the anode separator according to the present aspect for use in an electrochemical hydrogen pump makes it possible to further improve the gas diffusibility of an electrochemical cell than has conventionally been the case. This is for the following reason.

As a result of analyzing, in numerical simulation, a phenomenon of diffusion of an anode gas in an anode gas flow channel having a serpentine shape, it was confirmed that gas diffusibility to an anode improves in a U-shaped turn of the anode gas flow channel.

Further, it was confirmed by the aforementioned numerical simulation that the aforementioned improvement in gas diffusibility is more remarkable between adjacent flow channels constituting a turn of the anode gas flow channel on both sides. This is because more of the anode gas is supplied to the anode between turns, as the resistance with which the anode gas flows out from a turn and flows (takes a short cut) into an adjacent turn via an anode gas diffusion layer is lower than the resistance with which the anode gas passes through a turn of the anode gas flow channel. That is, it is conceivable that the gas diffusibility of an electrochemical cell may improve because a larger number of turns of an anode gas flow channel having a serpentine shape leads to an increased anode gas amount that is supplied to the anode from the anode gas flow channel on the anode separator. For this reason, by employing the divided anode gas flow channel configuration, the anode separator according to the present aspect for use in an electrochemical hydrogen pump makes it possible to make the number of turns of an anode gas flow channel larger than in a case where such a divided configuration is not employed, thereby bringing about improvement in gas diffusibility of an electrochemical cell.

An anode separator according to a second aspect of the present disclosure for use in an electrochemical hydrogen pump may be directed to the anode separator according to the first aspect, further including: a first anode gas supply manifold through which the anode gas that flows into the first anode gas flow channel flows; and a second anode gas supply manifold through which the anode gas that flows into the second anode gas flow channel flows.

According to such a configuration, by being provided with the first anode gas supply manifold and the second anode gas supply manifold, the anode separator according to the present aspect for use in an electrochemical hydrogen pump can be configured to be able to better hold down increases in pressure loss in the anode gas supply manifolds than in a case where one anode gas supply manifold is provided.

Specifically, the electrochemical hydrogen pump increases in pressure loss in the anode gas supply manifolds as the number of electrochemical cells that are stacked increases. This may impair uniformity in the supplied amounts of anode gas that are distributed separately to each of the electrochemical cells and cause an imbalance in the supplied amounts of anode gas across the electrochemical cells. Moreover, the imbalance in the supplied amounts of anode gas across the electrochemical cells invites a lack of anode gas supply in the electrochemical cells, thereby contributing to a deterioration in efficiency of hydrogen compression operation of the electrochemical hydrogen pump.

Note here that since, according to the aforementioned configuration, a plurality of the anode gas supply manifolds are provided, increases in pressure loss in the anode gas supply manifolds are held down, and a deterioration in efficiency of hydrogen compression operation of the electrochemical hydrogen pump is reduced.

An anode separator according to a third aspect of the present disclosure for use in an electrochemical hydrogen pump may be directed to the anode separator according to the second aspect, wherein a first anode inlet of the first anode gas flow channel and a second anode inlet of the second anode gas flow channel are adjacent to each other.

An anode separator according to a fourth aspect of the present disclosure for use in an electrochemical hydrogen pump may be directed to the anode separator according to the second aspect, wherein a total of an opening area of the first anode gas supply manifold and an opening area of the second anode gas supply manifold is larger than an opening area of the anode gas discharge manifold.

According to such a configuration, by making the total of the opening area of the first anode gas supply manifold and the opening area of the second anode gas supply manifold larger than the opening area of the anode gas discharge manifold, the anode separator according to the present aspect for use in an electrochemical hydrogen pump can be configured to be able to better hold down increases in pressure loss in the anode gas supply manifolds than in a case where the total of the opening area of the first anode gas supply manifold and the opening area of the second anode gas supply manifold is equal to or smaller than the opening area of the anode gas discharge manifold.

This allows the anode separator according to the present aspect for use in an electrochemical hydrogen pump to further improve efficiency in hydrogen compression operation of the electrochemical hydrogen pump than has conventionally been the case. Specifically, the deteriorated uniformity in the supplied amounts of anode gas that are distributed separately to each of the electrochemical cells, which is caused by increases in pressure loss in the anode gas supply manifolds, can be reduced. This brings about improvement in a lack of anode gas supply in each of the electrochemical cells, thereby reducing a deterioration in efficiency of hydrogen compression operation of the electrochemical hydrogen pump.

It should be noted that in a case where the anode gas supply apparatus is used to supply the anode gas to the anode gas supply manifolds, the rise in power consumption of the anode gas supply apparatus caused by the increases in pressure loss in the anode gas supply manifolds can be suppressed too.

An anode separator according to a fifth aspect of the present disclosure for use in an electrochemical hydrogen pump may be directed to the anode separator according to any one of the first to fourth aspects, wherein the first anode gas flow channel and the second anode gas flow channel are connected to the anode gas discharge manifold without intersecting each other.

According to such a configuration, by being configured such that the first anode gas flow channel and the second anode gas flow channel are connected to the anode gas discharge manifold without intersecting each other, the anode separator according to the present aspect for use in an electrochemical hydrogen pump can make the flow channel lengths of the anode gas flow channels shorter than in a case where one anode gas flow channel is laid within the anode separator. This makes it possible to reduce pressure losses in the anode gas flow channels. Further, even in a case where either of the first and second anode gas flow channels suffers from flow channel clogging (flooding) due to water, the anode gas can continue to be supplied to the other flow channel.

An anode separator according to a sixth aspect of the present disclosure for use in an electrochemical hydrogen pump may be directed to the anode separator according to any one of the first to fifth aspects, wherein the first anode gas flow channel and the second anode gas flow channel both become greater in amplitude of their serpentine shapes as they extend inward from their respective anode inlets and become smaller in amplitude of their serpentine shapes as they extend outward toward their respective anode outlets.

An anode separator according to a seventh aspect of the present disclosure for use in an electrochemical hydrogen pump may be directed to the anode separator according to any one of the first to sixth aspects, wherein the first anode gas flow channel includes a plurality of flow channels, and the plurality of flow channels merge downstream into a decreased number of flow channels.

An anode separator according to an eighth aspect of the present disclosure for use in an electrochemical hydrogen pump may be directed to the anode separator according to any one of the first to seventh aspects, wherein the second anode gas flow channel includes a plurality of flow channels, and the plurality of flow channels merge downstream into a decreased number of flow channels.

Further, when the anode gas passes through an anode gas flow channel in the opposite electrode section of the anode separator, an electrochemical reaction of the electrochemical cell causes the anode gas to migrate from the anode to the cathode. For this reason, the flow rate of the anode gas in the anode gas flow channel decreases as the anode gas migrates from upstream to downstream through the anode gas flow channel. Then, in a case where the flow channel cross-sectional area of an upstream side of the anode gas flow channel and the flow channel cross-sectional area of a downstream side of the anode gas flow channel are equal, the gas pressure of the anode gas flow channel is lower downstream than upstream. This causes a drop in supply pressure of the gas from the anode gas flow channel to the anode downstream of the anode gas flow channel, making it hard for the anode gas to be supplied to the anode. Moreover, such a phenomenon invites a lack of anode gas supply downstream of the anode gas flow channel of the electrochemical cell, thereby contributing to a deterioration in efficiency of hydrogen compression operation of the electrochemical hydrogen pump.

However, the anode separator according to the present aspect for use in an electrochemical hydrogen pump can be configured to be able to appropriately maintain the gas pressure of an anode gas flow channel, as causing a plurality of flow channels to merge into a decreased number of flow channels downstream of the anode gas flow channel makes the flow channel cross-sectional area of a downstream side of the anode gas flow channel smaller than the flow channel cross-sectional area of an upstream side of the anode gas flow channel.

An anode separator according to a ninth aspect of the present disclosure for use in an electrochemical hydrogen pump may be directed to the anode separator according to any one of the second to fourth aspects, wherein the predetermined line is a line connecting a midpoint between the first anode gas supply manifold and the second anode gas supply manifold with a center of the anode gas discharge manifold.

An anode separator according to a tenth aspect of the present disclosure for use in an electrochemical hydrogen pump may be directed to the anode separator according to any one of the first to ninth aspects, wherein the serpentine shapes are linearly symmetrical with respect to the predetermined line.

According to such a configuration, by being configured such that the serpentine shapes of the first and second anode gas flow channels are linearly symmetrical with respect to the center line, the anode separator according to the present aspect for use in an electrochemical hydrogen pump can more uniformly supply the anode gas to the anode in the opposite electrode section of the anode separator than in a case where the serpentine shapes are asymmetrical with respect to the center line.

An anode separator according to an eleventh aspect of the present disclosure for use in an electrochemical hydrogen pump may be directed to the anode separator according to any one of the second to fourth aspects, wherein the first anode gas flow channel linearly extend from the first anode gas supply manifold, then bends toward the line connecting the midpoint between the first anode gas supply manifold and the second anode gas supply manifold with the center of the anode gas discharge manifold, then bends toward the anode gas discharge manifold, and then starts the serpentine shape of the first anode gas flow channel.

An anode separator according to a twelfth aspect of the present disclosure for use in an electrochemical hydrogen pump may be directed to the anode separator according to any one of the second to fourth aspects, wherein the second anode gas flow channel linearly extend from the second anode gas supply manifold, then bends toward the line connecting the midpoint between the first anode gas supply manifold and the second anode gas supply manifold with the center of the anode gas discharge manifold, then bends toward the anode gas discharge manifold, and then starts the serpentine shape of the second anode gas flow channel.

According to the foregoing configuration, since the anode separator according to the present aspect for use in an electrochemical hydrogen pump is configured such that either of the first and second anode gas flow channels start its serpentine shape after having come close to the center line or both of the first and second anode gas flow channels start their serpentine shapes after having come close to the center line , dead spaces in which no anode gas flow channels are laid can be reduced in the opposite electrode section of the anode separator near the center line. This makes it possible to more uniformly supply the anode gas to the anode.

Further, by employing a configuration in which either of the first and second anode gas flow channels comes close to the center line or both of the first and second anode gas flow channels come close to the center line, the first anode gas supply manifold and the second anode gas supply manifold can be appropriately separated from each other. This makes it easy to place a seal member in a circular pattern on the outer periphery of each of the first and second anode gas supply manifolds of the anode separator according to the present aspect for use in an electrochemical hydrogen pump, thus making it easy to improve the gas sealability of the first and second anode gas supply manifolds.

An anode separator according to a thirteenth aspect of the present disclosure for use in an electrochemical hydrogen pump may be directed to the anode separator according to any one of the first to twelfth aspects, wherein a ratio of a flow channel depth of the first anode gas flow channel to a flow channel width of the first anode gas flow channel and a ratio of a flow channel depth of the second anode gas flow channel to a flow channel width of the second anode gas flow channel are both equal to or less than 0.5.

An electrochemical hydrogen pump according to a fourteenth aspect of the present disclosure includes an electrolyte membrane, an anode provided on a first principal surface of the electrolyte membrane, a cathode provided on a second principal surface of the electrolyte membrane, the anode separator according to any one of the first to thirteenth aspects provided on the anode, and a voltage applier that applies a voltage between the anode and the cathode. The electrochemical hydrogen pump causes, by using the voltage applier to apply a voltage, protons taken out from an anode gas supplied onto the anode to move to the cathode via the electrolyte membrane and produces compressed hydrogen.

According to such a configuration, the electrochemical hydrogen pump according to the present aspect may further improve in efficiency of hydrogen compression operation than has conventionally been the case. It should be noted that a description of the details of the working effects that are brought about by the electrochemical hydrogen pump according to the present aspect is omitted, as they can be easily understood from the working effects that are brought about by the anode separator according to any one of the aforementioned first to thirteenth aspects for use in an electrochemical hydrogen pump.

The following describes specific examples of the aforementioned aspects of the present disclosure with reference to the accompanying drawings.

The specific examples to be described below illustrate examples of the aforementioned aspects. Therefore, the shapes, materials, numerical values, constituent elements, placement and topology of constituent elements, or other features that are shown below are just a few examples and, unless recited in the claims, are not intended to limit the aforementioned aspects. Further, those of the following constituent elements which are not recited in an independent claim representing the most generic concept of the present aspects are described as optional constituent elements. Further, a description of those constituent elements given the same reference signs in the drawings may be omitted. Further, the drawings schematically show constituent elements for ease of comprehension and may not be accurate representations of shapes, dimensional ratios, or other features.

### (Embodiment)

### [Apparatus Configuration]

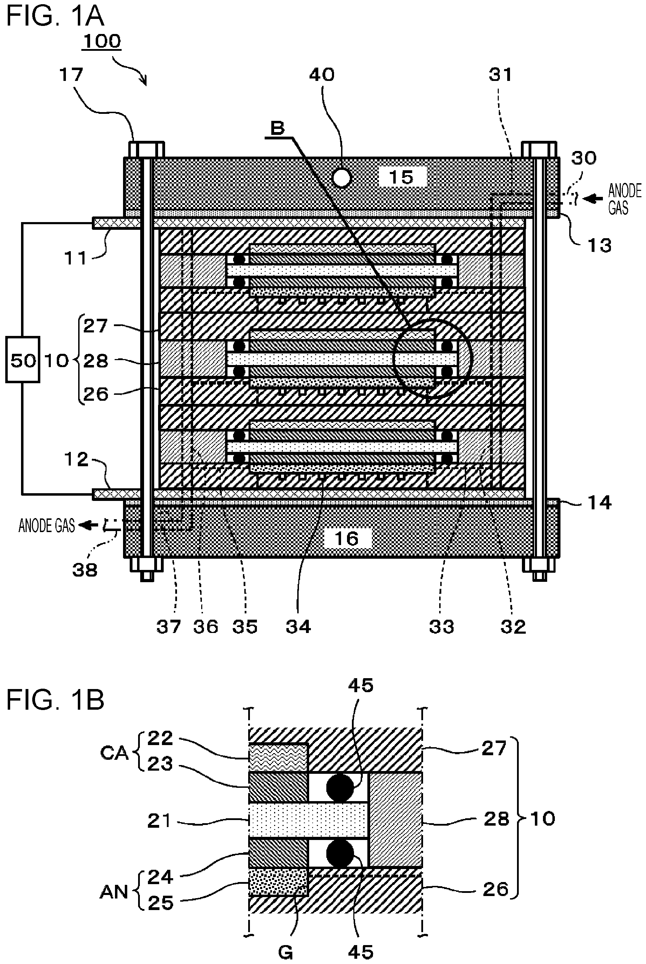

Figs. 1A and 1B are diagrams showing an example of an electrochemical hydrogen pump according to an embodiment. Fig. 1B is an enlarged view of a part B of Fig. 1A.

In the example shown in Figs. 1A and 1B, the electrochemical hydrogen pump 100 includes a stack in which a plurality of electrochemical cells 10 are stacked on top of each other and a voltage applier 50. In each of the electrochemical cells 10, an electrolyte membrane 21 is sandwiched between an anode AN and a cathode CA.

In Fig. 1A, three electrochemical cells 10 are stacked on top of each other. However, the number of electrochemical cells 10 that are stacked is not limited to this number. That is, the number of electrochemical cells 10 that are stacked can be set at an appropriate number on the basis of operating conditions such as the amount of hydrogen that the electrochemical hydrogen pump 100 compresses.

The electrochemical cell 10 includes the electrolyte membrane 21, the anode AN, the cathode CA, a cathode separator 27, an anode separator 26, and an insulator 28. Moreover, in the electrochemical cell 10, the electrolyte membrane 21, an anode catalyst layer 24, a cathode catalyst layer 23, an anode feeder 25, a cathode feeder 22, the anode separator 26, and the cathode separator 27 are stacked.

The anode AN is provided on a first principal surface of the electrolyte membrane 21. The anode AN is an electrode including the anode catalyst layer 24 and the anode feeder 25. On the anode separator 26, an O-ring 45 is provided in such a way as to surround the periphery of the anode catalyst layer 24 of the anode AN in plan view. This allows the anode AN to be appropriately sealed with the O-ring 45.

The cathode CA is provided on a second principal surface of the electrolyte membrane 21. The cathode CA is an electrode including the cathode catalyst layer 23 and the cathode feeder 22. On the cathode separator 27, an O-ring 45 is provided in such a way as to surround the periphery of the cathode catalyst layer 23 of the cathode CA in plan view. This allows the cathode CA to be appropriately sealed with the O-ring 45.

The electrolyte membrane 21 is a polymer membrane having a proton-conducting property. The electrolyte membrane 21 may be configured in any way as long as it has a proton-conducting property. Possible examples of the electrolyte membrane 21 include, but are not limited to, a fluorinated polymer electrolyte membrane and a hydrocarbon polymer electrolyte membrane. Specifically, usable examples of the electrolyte membrane 21 include Nafion (registered trademark, manufactured by DuPont) and Aciplex (registered trademark, manufactured by Asahi Kasei Corporation).

Thus, the electrolyte membrane 21 is sandwiched between the anode AN and the cathode CA in such a way as to make contact with the anode catalyst layer 24 and the cathode catalyst layer 23. It should be noted that a stack of the cathode CA, the electrolyte membrane 21, and the anode AN is referred to as "membrane-electrode assembly" (hereinafter abbreviated as "MEA").

The anode catalyst layer 24 is provided in contact with the first principal surface of the electrolyte membrane 21. Examples of a catalyst metal that the anode catalyst layer 24 contains include, but are not limited to, platinum.

The cathode catalyst layer 23 is provided in contact with the second principal surface of the electrolyte membrane 21. Examples of a catalyst metal that the cathode catalyst layer 23 contains include, but are not limited to, platinum.

Examples of catalyst carriers of the cathode catalyst layer 23 and the anode catalyst layer 24 include, but are not limited to, carbon particles such as carbon black and black lead and electrically-conductive oxide particles.

In the cathode catalyst layer 23 and the anode catalyst layer 24, fine particles of catalyst metal are highly dispersedly carried by the catalyst carriers. Further, it is common to add a proton-conducting ionomer into the cathode catalyst layer 23 and the anode catalyst layer 24 in order to make a large electrode reaction site.

The cathode feeder 22 is provided on the cathode catalyst layer 23. Further, the cathode feeder 22 is constituted by a porous material, and has electrical conductivity and gas diffusibility. Furthermore, it is desirable that the cathode feeder 22 have such elasticity as to appropriately follow the displacement and deformation of a constituent member that occur due to a differential pressure between the cathode CA and the anode AN during operation of the electrochemical hydrogen pump 100.

In the electrochemical hydrogen pump 100 according to the present embodiment, a member made from carbon fibers is used as the cathode feeder 22. For example, a porous carbon fiber sheet such as carbon paper, carbon cloth, or carbon felt may be used.

Note, however, that as a base material from which the cathode feeder 22 is made, a carbon fiber sheet may not be used. For example, as a base material from which the cathode feeder 22 is made, a sintered body of metal fibers made of titanium, a titanium alloy, stainless steel, or other metals or a sintered body of metal particles made thereof may be used.

The anode feeder 25 is provided on the anode catalyst layer 24. Further, the anode feeder 25 is constituted by a porous material, and has electrical conductivity and gas diffusibility. Furthermore, it is desirable that the anode feeder 25 be so high in rigidity as to be able to inhibit the displacement and deformation of a constituent member that occur due to a differential pressure between the cathode CA and the anode AN during operation of the electrochemical hydrogen pump 100.

Specifically, usable examples of a base material from which the anode feeder 25 is made include a fiber sintered body, a powder sintered body, an expanded metal, a metal mesh, and a punching metal that are made of titanium, a titanium alloy, stainless steel, carbon, or other materials.

The anode separator 26, which is made of metal, is a member stacked on the anode AN. The cathode separator 27, which is made of metal, is a member stacked on the cathode CA.

In central parts of the cathode separator 27 and the anode separator 26, recesses are provided, and in these recesses, the cathode feeder 22 and the anode feeder 25 are accommodated, respectively.

Further, in outer peripheral parts of the recesses of the cathode separator 27 and the anode separator 26, a tubular anode gas supply manifold 32 and a tubular anode gas discharge manifold 36 are provided.

Note here that the anode gas supply manifold 32 is constituted by a series of through-holes provided at appropriate points in constituent members of the electrochemical hydrogen pump 100 when the electrochemical cells 10 are stacked on top of each other. Moreover, in the electrochemical hydrogen pump 100, an anode gas having flowed into the electrochemical hydrogen pump 100 is distributed to each of the electrochemical cells 10 through the anode gas supply manifold 32, whereby the anode gas is supplied to the anode AN of the electrochemical cell 10 through the anode gas supply manifold 32.

The anode gas discharge manifold 36 is constituted by a series of through-holes provided at appropriate points in constituent members of the electrochemical hydrogen pump 100 when the electrochemical cells 10 are stacked on top of each other. Moreover, in the electrochemical hydrogen pump 100, the anode gas having passed through the electrochemical cells 10 meet at the anode gas discharge manifold 36, whereby the anode gas is discharged out of the electrochemical hydrogen pump 100 through the anode gas discharge manifold 36. It should be noted that possible examples of the anode gas include a hydrogen-containing gas. This hydrogen-containing gas may be hydrogen gas generated through the electrolysis of water, or may be reformed gas generated by a reforming reaction of hydrocarbon gas.

Note here that in the electrochemical hydrogen pump 100 according to the present embodiment, the anode gas supply manifold 32 is constituted by a plurality of manifolds, and the anode gas discharge manifold 36 is constituted by one manifold. Moreover, the total of the opening areas of a plurality of the anode gas supply manifolds 32 is larger than the opening area of one anode gas discharge manifold 36. Although, in an example shown below, the opening area of one anode gas supply manifold 32 and the opening area of one anode gas discharge manifold 36 are equal to each other, this is not intended to impose any limitation. There may be any magnitude relationship between the opening area of one anode gas supply manifold 32 and the opening area of one anode gas discharge manifold 36, provided the total of the opening areas of a plurality of the anode gas supply manifolds 32 is larger than the opening area of one anode gas discharge manifold 36. The configuration of the anode gas supply manifold 32 and the anode gas discharge manifold 36 will be described in detail in section "Example".

Further, although not illustrated, a tubular cathode gas discharge manifold is provided at a point where the anode gas discharge manifold 36 would be if the anode gas discharge manifold 36 were rotated approximately 90 degrees.

The cathode gas discharge manifold (not illustrated) is constituted by a series of through-holes provided at appropriate points in constituent members of the electrochemical hydrogen pump 100 when the electrochemical cells 10 are stacked on top of each other. Moreover, in the electrochemical hydrogen pump 100, high-pressure hydrogen (hereinafter referred to as "compressed hydrogen") compressed at the cathodes CA of the electrochemical cells 10 meet at the cathode gas discharge manifold, whereby the compressed hydrogen is discharged out of the electrochemical hydrogen pump 100 through the cathode gas discharge manifold.

As shown in Fig. 1A, a principal surface of the cathode separator 27 that makes contact with the cathode feeder 22 is constituted by a flat surface without a cathode flow channel provided therein. This makes it possible to attain a larger area of contact between the cathode feeder 22 and the cathode separator 27 than in a case where a cathode gas flow channel is provided in the principal surface of the cathode separator 27. This allows the electrochemical hydrogen pump 100 to reduce contact resistance between the cathode feeder 22 and the cathode separator 27.

On the other hand, a principal surface of the anode separator 26 that makes contact with the anode feeder 25 is provided, for example, with a flow channel having a serpentine shape (hereinafter referred to as "serpentine flow channel 34") including a plurality of U-shaped turns and a plurality of linear portions in plan view.

The anode separator 26 and the cathode separator 27 may be constituted, for example, by metal sheets of titanium or stainless steel. In a case where these metal sheets are constituted by stainless steel, SUS316L or SUH660 is superior in properties such as acid resistance and hydrogen brittleness resistance among various types of stainless steel.

Further, in each of the electrochemical cells 10 of the electrochemical hydrogen pump 100, an annular and flat insulator 28 provided in such a way as to surround the periphery of the electrolyte membrane 21 is sandwiched between the cathode separator 27 and the anode separator 26. Possible examples of a base material from which the insulator 28 is made include, but are not limited to, fluorocarbon rubber. This makes it possible to appropriately prevent a short circuit between the cathode separator 27 and the anode separator 26 in the electrochemical cell 10.

The voltage applier 50 is a device that applies a voltage between the anode AN and cathode CA. The voltage applier 50 may be configured in any way as long as it can apply a voltage between the anode AN and the cathode CA. For example, the voltage applier 50 has its high-potential terminal connected to the anode AN and has its low-potential terminal connected to the cathode CA. In the electrochemical hydrogen pump 100 according to the present embodiment, the voltage applier 50 has its low-potential terminal connected to a feeding plate 11 that is in contact with the uppermost cathode separator 27, and has its high-potential terminal connected to a feeding plate 12 that is in contact with the lowermost anode separator 26.

Possible examples of the voltage applier 50 include a DC/DC converter and an AC/DC converter. The DC/DC converter is used in a case where the voltage applier 50 is connected to a direct-current power source such as a battery, a solar cell, or a fuel cell. The AC/DC converter is used in a case where the voltage applier 50 is connected to an alternate-current power source such as a commercial power source. Alternatively, the voltage applier 50 may be an electricity-powered power source by which a voltage that is applied between the anode AN and the cathode CA and an electric current that flows between the anode AN and the cathode CA are adjusted so that electric power of a predetermined set value is supplied to the electrochemical cell 10.

In this way, the electrochemical hydrogen pump 100 uses the voltage applier 50 to pass electric current between the anode AN and the cathode CA. That is, the electrochemical hydrogen pump 100 is an apparatus that generates compressed hydrogen by using the voltage applier 50 to apply a voltage between the anode AN and the cathode CA to cause protons taken out from an anode gas supplied onto the anode AN to migrate ono the cathode CA via the electrolyte membrane 21.

Next, a configuration for fastening the plurality of electrochemical cells 10 of the electrochemical hydrogen pump 100 to each other is described.

In order to appropriately retain the plurality of electrochemical cells 10 in a stacked state, it is necessary to sandwich end faces of the cathode separators 27, which are the uppermost layers of the electrochemical cells 10, and end faces of the anode separators 26, which are the lowermost layers of the electrochemical cells 10, between the end plates 15 and 16 via a combination of the feeding plate 11 and the insulating plate 13 and a combination of the feeding plate 12 and the insulating plate 14, respectively, and apply a desired fastening pressure to the electrochemical cells 10.

For that purpose, a plurality of fasteners 17 for applying a fastening pressure to the electrochemical cells 10 are provided at appropriate points in the end plates 15 and 16. The fasteners 17 may be configured in any way as long as they can fasten the plurality of electrochemical cells 10 to each other. Possible examples of the fasteners 17 include bolts passed through the end plates 15 and 16 and nuts with disc springs.

The end plate 15 is provided with a cathode gas lead-out flow channel 40. The cathode gas lead-out flow channel 40 may be constituted by a pipe through which compressed hydrogen discharged from the cathodes CA flows.

Specifically, the cathode gas lead-out flow channel 40 communicates with the aforementioned cathode gas discharge manifold (not illustrated). Moreover, the cathode gas discharge manifold communicates with the cathode CA of each of the electrochemical cells 10 via a cathode gas communicating path (not illustrated). This causes the high-pressure compressed hydrogen having passed through the respective cathodes CA of the electrochemical cells 10 to meet at the cathode gas discharge manifold. Then, the confluent compressed hydrogen is led to the cathode gas lead-out flow channel 40 and is thereby discharged out of the electrochemical hydrogen pump 100.

Between the cathode separator 27 and the anode separator 26, a sealing member such as an O-ring (not illustrated) is provided in such a way as to surround the cathode gas discharge manifold in plan view, and the cathode gas discharge manifold is appropriately sealed with this sealing member.

Further, the end plate 15 is provided with an anode gas lead-in flow channel 30. The anode gas lead-in flow channel 30 may be constituted by a pipe through which an anode gas that is supplied to the anodes AN flows. Specifically, the anode gas lead-in flow channel 30 communicates with the aforementioned anode gas supply manifold 32 via an anode gas supply flow channel 31 provided in the end plate 15. Moreover, the anode gas supply manifold 32 communicates with an inflow end of the serpentine flow channel 34 of each of the electrochemical cells 10 via an anode gas supply communicating path 33.

Thus, the anode gas , led from the anode gas lead-in flow channel 30, that has passed through the anode gas supply flow channel 31 is distributed to each of the electrochemical cells 10 through the anode gas supply manifold 32, which communicates with the serpentine flow channel 34 and anode gas supply communicating path 33 of each of the electrochemical cells 10. Then, the anode gas thus distributed is supplied from the anode feeder 25 to the anode catalyst layer 24.

The end plate 16 is provided with an anode gas lead-out flow channel 38. The anode gas lead-out flow channel 38 may be constituted by a pipe through which the anode gas discharged from the anodes AN flow. Specifically, the anode gas lead-out flow channel 38 communicates with the aforementioned anode gas discharge manifold 36 via an anode gas emission flow channel 37 provided in the end plate 16. Moreover, the anode gas discharge manifold 36 communicates with an outflow end of the serpentine flow channel 34 of each of the electrochemical cells 10 via an anode gas emission communicating path 35.

This causes excesses of the anode gas having passed through the respective serpentine flow channels 34 and anode gas emission communicating paths 35 of the electrochemical cells 10 to meet at the anode gas discharge manifold 36. Then, the confluent anode gas is lead from the anode gas emission flow channel 37 to the anode gas lead-out flow channel 38.

Between the cathode separator 27 and the anode separator 26, sealing members such as O-rings are provided in such a way as to surround the anode gas supply manifold 32 and the anode gas discharge manifold 36 in plan view, and the anode gas supply manifold 32 and the anode gas discharge manifold 36 are appropriately sealed with these sealing members.

It should be noted here that an "anode gas flow channel" of the present disclosure is constituted by a flow channel including a serpentine flow channel 34, an anode gas supply communicating path 33, and an anode gas emission communicating path 35. Moreover, the "anode gas flow channel" is connected to each of a plurality of the anode gas supply manifold 32 and connected by one anode gas discharge manifold 36. The configuration of such an "anode gas flow channel" is described in detail in section "Example".

Although not illustrated, a hydrogen supply system including the aforementioned electrochemical hydrogen pump 100 may be constructed. It should be noted that devices required in hydrogen supply operation of the hydrogen supply system are provided as appropriate. For example, the hydrogen supply system may be provided with a dew-point adjuster (e.g. a humidifier). This dew-point adjuster may for example be a device that adjusts the dew point of a gas mixture of an excess of the anode gas led out of the electrochemical hydrogen pump 100 through the anode gas lead out flow channel 38 and an anode gas supplied from an appropriate hydrogen gas supply source through the anode gas lead-in flow channel 30. At this point in time, a supply pressure of the hydrogen gas supply source may be used to supply the anode gas from the hydrogen gas supply source to the dew-point adjuster, or an anode gas supply apparatus such as a pump may be used to supply the anode gas from the hydrogen gas supply source to the dew-point adjuster. Possible examples of the hydrogen gas supply source include a gas reservoir (e.g. a gas cylinder) and a gas supply infrastructure.

Further, the hydrogen supply system man be provided, for example, with a temperature detector that detects the temperature of the electrochemical hydrogen pump 100, a hydrogen reservoir that temporarily stores the compressed hydrogen discharged from the cathodes CA of the electrochemical hydrogen pump 100, a pressure detector that detects a gas pressure in the hydrogen reservoir, or other devices.

It should be noted that the configuration of the electrochemical hydrogen pump 100 and the various devices (not illustrated) in the hydrogen supply system are just a few examples and are not limited to the present example.

### [Operation]

The following describes an example of hydrogen compression operation of the electrochemical hydrogen pump 100 with reference to Fig. 1A.

The following operation may be executed, for example, by an arithmetic circuit of a controller (not illustrated) in accordance with a control program from a memory circuit of the controller. Note, however, that it is not essential that the following operation be executed by the controller. An operator may execute part of the operation. The following example describes a case where the operation is controlled by the controller.

First, when a low-pressure anode gas led through the anode gas lead-in flow channel 30 flows through the anode gas supply flow channel 31, the anode gas supply manifold 32, the anode gas supply communicating path 33, and the serpentine flow channel 34 in this order, the anode gas is supplied to the anode AN of the electrochemical hydrogen pump 100. At this point in time, a voltage of the voltage applier 50 is fed to the electrochemical hydrogen pump 100.

An excess of the anode gas having passed through the serpentine flow channel 34 flows through the anode gas emission communicating path 35, the anode gas discharge manifold 36, and the anode gas lead-out flow channel 37 in this order, and is led out of the electrochemical hydrogen pump 100 through the anode gas lead-out flow channel 38. It should be noted that the following electrochemical reaction in the electrochemical cell 10 causes a large portion of the anode gas to migrate from the anode AN to the cathode CA of the electrochemical cell 10 when the anode gas passes through the serpentine flow channel 34. For this reason, the flow rate of an excess of the anode gas that is led out of the electrochemical hydrogen pump 100 through the anode gas lead-out flow channel 38 is approximately several tens of percent of the flow rate of the anode gas that passes through the anode gas supply manifold 32.

Thus, in the anode catalyst layer 24 of the anode AN, hydrogen molecules are separated into protons and electrons through an oxidation reaction (Formula (1)). The protons migrate to the cathode catalyst layer 23 by traveling through the electrolyte membrane 21. The electrons migrate to the cathode catalyst layer 23 through the voltage applier 50. Then, in the cathode catalyst layer 23, the hydrogen molecules are regenerated through a reduction reaction (Formula (2)). It should be noted that it is known that when the protons travel through the electrolyte membrane 21, a predetermined amount of water migrates as electroosmotic water from the anode AN to the cathode CA, together with the protons.

At this point in time, by using a flow controller (not illustrated) to increase a pressure loss of a cathode gas emission flow channel (e.g. the cathode gas lead-out flow channel 40 of Fig. 1A), hydrogen generated at the cathode CA can be compressed. Possible examples of the flow controller include a back pressure valve, a regulating valve, or other valves provided in the cathode gas lead-out flow channel 40.

Anode: H₂ (low pressure) → 2H⁺ + 2e⁻ (1)

Cathode: 2H⁺ + 2e⁻ → Hz (high pressure) (2)

In this way, the electrochemical hydrogen pump 100 performs an operation of generating compressed hydrogen at the cathode CA by using the voltage applier 50 to apply a voltage between the anode AN and the cathode CA to cause protons in an anode gas that is supplied to the anode AN to migrate to the cathode CA.

The compressed hydrogen generated at the cathode CA is supplied to a hydrogen demander after having passed through the cathode gas communicating path, the cathode gas discharge manifold, and the cathode gas lead-out flow channel 40 in this order. Possible examples of the hydrogen demander include a hydrogen reservoir, a pipe of a hydrogen infrastructure, and a fuel cell. For example, the compressed hydrogen may be temporarily stored in the hydrogen reservoir, which is an example of the hydrogen demander, through the cathode gas lead-out flow channel 40. Further, the hydrogen stored in the hydrogen reservoir may be supplied to the fuel cell, which is an example of the hydrogen demander, at an appropriate time.

### (Example)

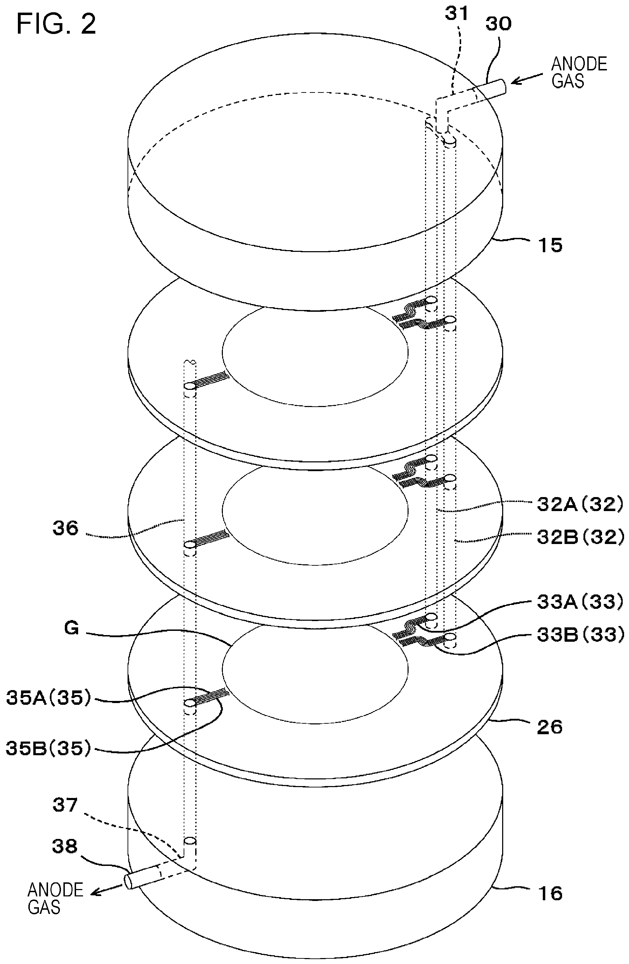

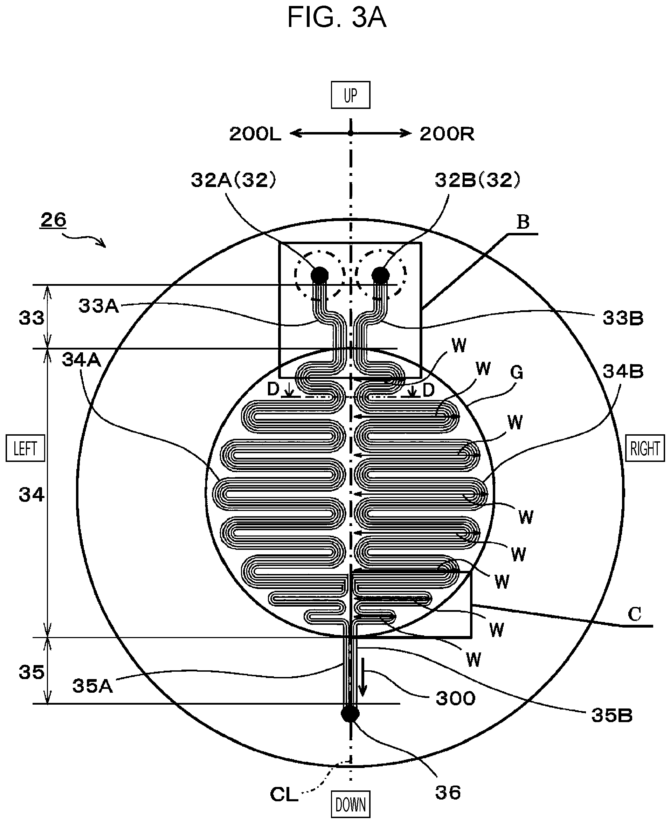

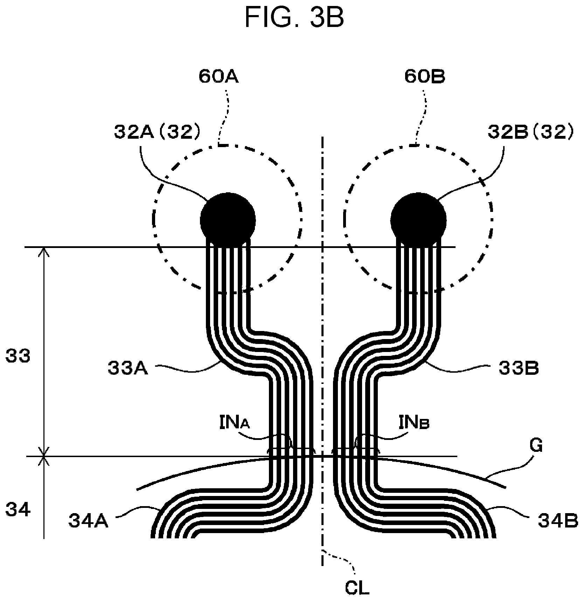

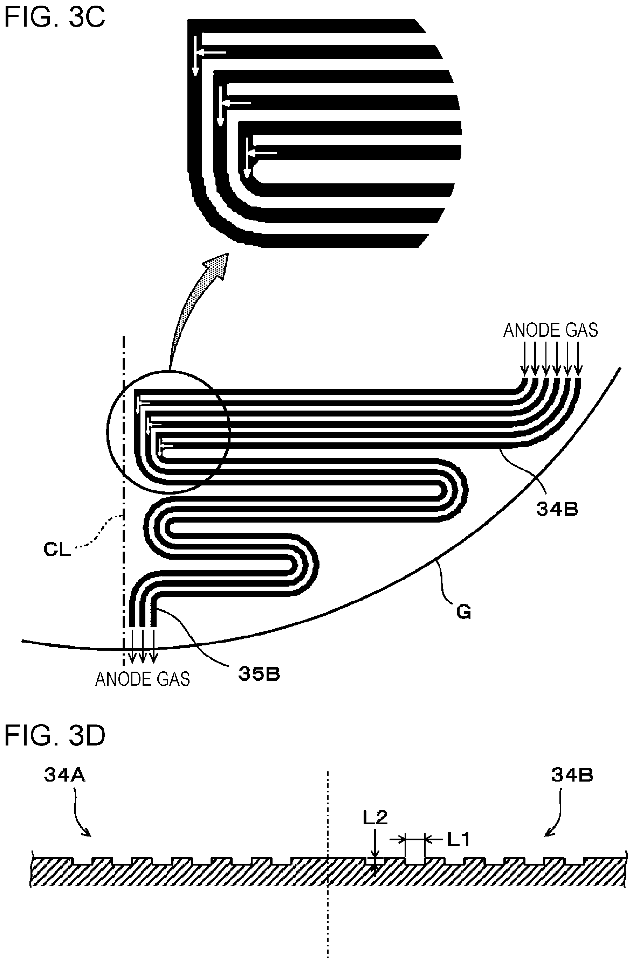

Fig. 2 is a perspective view of examples of an anode separator and end plates for use in an electrochemical hydrogen pump according to an example of the embodiment. Fig. 3A is a plan view of the anode separator of Fig. 2. Fig. 3B is an enlarged view of a part B of Fig. 3A. Fig. 3C is an enlarged view of a part C of Fig. 3A. Fig. 3D is an enlarged view of a part D of Fig. 3A.

Note, however, that for convenience of explanation, the drawings omit to illustrate the through-holes constituting the tubular cathode gas discharge manifold. Further, Fig. 2 omits to illustrate the constituent members of the electrochemical hydrogen pump 100 except for three anode separator 26 and the end plates 15 and 16 and omits to illustrate anode gas flow channels provided in the opposite electrode section G of each of the anode separator 26. Furthermore, for convenience of explanation, Fig. 3A takes "UP", "DOWN", "RIGHT", and "LEFT" as shown therein.

As shown in Fig. 2, the anode gas supply flow channel 31 is configured to be able to, by causing an anode gas that is introduced from the anode gas lead-in flow channel 30 to branch off halfway into two flows in the end plate 15, distribute equal amounts of anode gas to a first anode gas supply manifold 32A and a second anode gas supply manifold 32B, respectively. Note here that the anode gas that flows into a first anode gas supply communicating path 33A flows through the first anode gas supply manifold 32A. The anode gas that flows into a second anode gas supply communicating path 33B flows through the second anode gas supply manifold 32B.

It should be noted that the anode gas supply flow channel 31 may be constituted, for example, by an opening and a flow channel groove that are provided in the end plate 15. In this case, the opening has its inlet connected to the anode gas lead-in flow channel 30, which is provided in a side surface of the end plate 15, and the opening has its outlet connected to a central part of a flow channel groove made in a principal surface of the end plate 15. Moreover, the flow channel groove has both of its ends connected to the first anode gas supply manifold 32A and the second anode gas supply manifold 32B, respectively.

Further, the anode gas emission flow channel 37 is configured in the end plate 16 to be able to lead, to the anode gas lead-out flow channel 38, an excess of the anode gas discharged from the anode gas discharge manifold 36. Note here that the anode gas having flowed through a first anode gas emission communicating path 35A and the anode gas having flowed through a second anode gas emission communicating path 35B meet at the anode gas discharge manifold 36.

It should be noted that the anode gas emission flow channel 37 may be constituted, for example, by an opening provided in the end plate 16. In this case, the opening has its inlet connected to the anode gas discharge manifold 36 at a principal surface of the end plate 16, and the opening has its outlet connected to the anode gas lead-out flow channel 38, which is provided in a side surface of the end plate 16.

Further, as shown in Figs. 2 and 3A, the anode separator 26 is provided with a through-hole that is circular in cross-section and that constitutes part of the first anode gas supply manifold 32A, a through-hole that is circular in cross-section and that constitutes part of the second anode gas supply manifold 32B, and a through-hole that is circular in cross-section and that constitutes part of the anode gas discharge manifold 36. Moreover, these through-holes may be equal in opening area to one another.

In this way, the anode separator 26 according to the present example for use in an electrochemical hydrogen pump 100 is configured such that a total of an opening area of the first anode gas supply manifold 32A and an opening area of the second anode gas supply manifold 32B is larger than an opening area of the anode gas discharge manifold 36. This allows the anode separator 26 according to the present example for use in an electrochemical hydrogen pump 100 to further improve efficiency in hydrogen compression operation of the electrochemical hydrogen pump 100 than has conventionally been the case. A description of the details of such a working effect is omitted, as they are the same as those of a working effect that is brought about by the electrochemical hydrogen pump 100 according to the embodiment.

Next, a configuration of anode gas flow channels is described in detail with reference to the drawings.

First, as shown in Fig. 3A, the anode separator 26 according to the present example for use in an electrochemical hydrogen pump 100 is configured such that a first anode gas flow channel having a serpentine shape and a second anode gas flow channel having a serpentine shape are provided in a first region 200L and a second region 200R, respectively, that are divided from each other by a predetermined line parallel to a direction 300 of an anode gas that flows into the anode gas discharge manifold 36 (such a configuration being hereinafter referred to as "divided anode gas flow channel configuration").

It should be noted that the "predetermined line parallel to a direction 300 of an anode gas" may be a center line CL (which will be described in detail later) extending in an up-down direction, or may be a line different from the center line CL. In the former case, the anode separator 26 is divided by the center line CL into the first region 200L and the second region 200R as left and right equal parts.

As noted above, the anode separator 26 includes the first anode gas supply manifold 32A, through which the anode gas that flows into the first anode gas flow channel flows, and the second anode gas supply manifold 32B, through which the anode gas that flows into the second anode gas flow channel flows. Moreover, as shown in Fig. 3B, an anode inlet INA of the first anode gas flow channel and an anode inlet INB of the second anode gas flow channel are adjacent to each other.

Further, as shown in Fig. 3A, the first anode gas flow channel, which is connected to the first anode gas supply manifold 32A, and the second anode gas flow channel, which is connected to the second anode gas supply manifold 32B, are connected to the anode gas discharge manifold 36 without intersecting each other. That is, the "first anode gas flow channel" of the present disclosure includes the first anode gas supply communicating path 33A, a first serpentine flow channel 34A, and the first anode gas emission communicating path 35A, and is constituted by a flow channel laid in the first region 200L of the anode separator 26. Further, the "second anode gas flow channel" of the present disclosure includes the second anode gas supply communicating path 33B, a second serpentine flow channel 34B, and the second anode gas emission communicating path 35B, and is constituted by a flow channel laid in the second region 200R of the anode separator 26.

Furthermore, as shown in Fig. 3A, the first anode gas flow channel and the second anode gas flow channel both become greater in amplitude W of their serpentine shapes as they extend inward from their respective anode inlets INA and INB and become smaller in amplitude W of their serpentine shapes as they extend outward toward their respective anode outlets. That is, the amplitude W of the serpentine shapes of the first and second serpentine flow channels 34A and 34B that extend in a right-left direction reaches its maximum in a central part of the opposite electrode section G of the anode separator 26.

It should be noted that the first anode gas flow channel and the second anode gas flow channel can be obtained, for example, by making projections and depressions on a principal surface of the anode separator 26 in cross-sectional view by using appropriate etching or other processes.

Note here that examples of methods for forming the anode gas flow channels in the surface of the anode separator 26 include grooving based on cutting of the anode separator 26 and grooving based on etching of the anode separator 26. However, grooving based on cutting of a metallic material is higher in cost than grooving based on etching of a metallic material. For this reason, in forming the anode gas flow channels in the surface of the anode separator 26, grooving the surface of the anode separator 26 by etching is more desirable than grooving the surface of the anode separator 26 by cutting from the point of view of reducing the processing cost of the anode separator 26. Note, however, that grooving the anode separator 26 by etching results in shallower flow channel grooves than grooving the anode separator 26 by cutting. For example, as shown in Fig. 3D, as a result of grooving the anode separator 26 by etching in order to form the anode gas flow channels in the surface of the anode separator 26, a ratio (L2/L1) of a flow channel depth L2 of the first anode gas flow channel to a flow channel width L1 of the first anode gas flow channel and a ratio (L2/L1) of a flow channel depth L2 of the second anode gas flow channel to a flow channel width L1 of the second anode gas flow channel may both be equal to or less than 0.5. It should be noted that of the projections and depressions, the depressions of Fig. 3D are equivalent to flow channel grooves through which the anode gas flows, and are indicated by black lines in Fig. 3A. Further, of the projections and depressions, the projections of Fig. 3D are equivalent to supporters that support the anode AN of the anode separator 26, and are indicated by white lines in Fig. 3A.

Further, as shown in Fig. 3A, when seen in plan view, the serpentine shape of the first serpentine flow channel 34A and the serpentine shape of the second serpentine flow channel 34B are linearly symmetrical with respect to a line (hereinafter referred to as "center line CL") connecting the midpoint between the first anode gas supply manifold 32A and the second anode gas supply manifold 32B with the center of the anode gas discharge manifold 36. It should be noted that as shown in Fig. 3A, the "midpoint between the first anode gas supply manifold 32A and the second anode gas supply manifold 32B" means the midpoint of a line segment connecting the center of the first anode gas supply manifold 32A with the center of the second anode gas supply manifold 32B in a plan view of the anode separator 26.

In the present example, eight U-shaped turns of the first serpentine flow channel 34A located leftward away from the center line CL and eight U-shaped turns of the second serpentine flow channel 34B located rightward away from the center line CL are linearly symmetrical with respect to the center line CL. Further, seven U-shaped turns of the first serpentine flow channel 34A located close to the center line CL and seven U-shaped turns of the second serpentine flow channel 34B located close to the center line CL are linearly symmetrical with respect to the center line CL. Furthermore, linear portions of the first serpentine flow channel 34A connecting the turns with each other and linear portions of the second serpentine flow channel 34B connecting the turns with each other are linearly symmetrical with respect to the center line CL. By thus employing the divided anode gas flow channel configuration in the anode separator 26 according to the present example for use in an electrochemical hydrogen pump 100, the number of U-shaped turns of the anode gas flow channels can be made larger than in a case where such a divided configuration is not employed.

As shown in Figs. 3A and 3B, in the first anode gas supply communicating path 33A, the first anode gas flow channel linearly extends in an up-down direction from the first anode gas supply manifold 32A, then bends toward the center line CL, then bends toward the anode gas discharge manifold 36, and then starts the serpentine shape of the first serpentine flow channel 34A. Further, in the second anode gas supply communicating path 33B, the second anode gas flow channel linearly extends in an up-down direction from the second anode gas supply manifold 32B, then bends toward the center line CL, then bends toward the anode gas discharge manifold 36, and then starts the serpentine shape of the second serpentine flow channel 34B.

In the present example, the first anode gas supply communicating path 33A and the second anode gas supply communicating path 33B extend parallel to the center line CL from the first anode gas supply manifold 32A and the second anode gas supply manifold 32B, which are located away from the center line CL, respectively, and then bend toward the center line CL by changing their flow channel directions approximately 90 degrees. Then, the first anode gas supply communicating path 33A and the second anode gas supply communicating path 33B bend again in locations close to the center line CL by changing their flow channel directions approximately 90 degrees, extend parallel to the center line CL, and become connected to the first serpentine flow channel 34A and the second serpentine flow channel 34B, respectively.

As shown in Figs. 3A and 3C, each of the first and second anode gas flow channels includes a plurality of flow channels, and the plurality of flow channels merge downstream into a decreased number of flow channels.

In the present example, the first serpentine flow channel 34A is configured such that six flow channel grooves connected to the first anode gas supply communicating path 33A merge downstream and decrease to as half as many (three) flow channel grooves connected to the first anode gas emission communicating path 35A. Further, the second serpentine flow channel 34B is configured such that six flow channel grooves connected to the second anode gas supply communicating path 33B merge downstream and decrease to as half many (three) flow channel grooves connected to the second anode gas emission communicating path 35B.

It should be noted that the anode separator 26 for use in an electrochemical hydrogen pump 100 and the configuration of the end plates 15 and 16 are just a few examples and are not limited to the present example.

For example, although, in the foregoing, the number of anode gas supply manifolds 32 is 2, this is not intended to impose any limitation. Further, although the anode gas supply manifold 32 is circular in flow channel cross-section, this is not intended to impose any limitation, either. The number of anode gas supply manifolds 32 and the flow channel cross-section of the anode gas supply manifold 32 can be set to an appropriate number and an appropriate cross-sectional shape on the basis of operating conditions of the electrochemical hydrogen pump 100 such as the amount of anode gas that is supplied.

Further, although, in the foregoing, the number of flow channels of each of the first and second serpentine flow channels 34A and 34B is 6 upstream, this is not intended to impose any limitation. These number of flow channel can be set at an appropriate number on the basis of operating conditions of the electrochemical hydrogen pump 100 such as the amount of anode gas that is supplied.

Further, although, in the foregoing, the number of flow channels of each of the first and second serpentine flow channels 34A and 34B is decreased to half (three) downstream, this is not intended to impose any limitation. For example, the number of flow channels of each of the first and second serpentine flow channels 34A and 34B may be decreased more than once the first and second serpentine flow channels 34A and 34B each divided into three or more regions.

With the aforementioned configuration, the anode separator 26 according to the present example for use in an electrochemical hydrogen pump 100 can bring about the following various working effects.

The anode separator 26 according to the present example for use in an electrochemical hydrogen pump 100 makes it possible to further improve efficiency in hydrogen compression operation of the electrochemical hydrogen pump 100 than has conventionally been the case. This is for the following reason.

First, by employing the divided anode gas flow channel configuration, the anode separator 26 according to the present example for use in an electrochemical hydrogen pump 100 makes it possible to make the number of anode gas flow channels larger than in a case where such a divided configuration is not employed, thereby bringing about a reduction in pressure loss in anode gas supply. That is, by employing the foregoing divided anode gas flow channel configuration even in a case of grooving the anode separator 26 by etching in order to form the anode gas flow channels in the surface of the anode separator 26, the anode separator 26 according to the present example for use in an electrochemical hydrogen pump 100 makes it possible to appropriately hold down increases in pressure loss in the anode gas flow channels. For this reason, the anode separator 26 according to the present example for use in an electrochemical hydrogen pump 100 holds down increases in power consumption of the anode gas supply apparatus caused by increases in pressure loss in the anode gas flow channels. That is, a deterioration in efficiency of hydrogen compression operation of the electrochemical hydrogen pump 100 is reduced.

Further, the anode separator 26 according to the present example for use in an electrochemical hydrogen pump 100 makes it possible to further improve the gas diffusibility of an electrochemical cell 10 than has conventionally been the case. This is for the following reason.

As a result of analyzing, in numerical simulation, a phenomenon of diffusion of an anode gas in an anode gas flow channel having a serpentine shape, it was confirmed that gas diffusibility to an anode improves in a U-shaped turn of the anode gas flow channel.

Further, it was confirmed by the aforementioned numerical simulation that the aforementioned improvement in gas diffusibility is more remarkable between adjacent flow channels constituting a turn of the anode gas flow channel on both sides. This is because more of the anode gas is supplied to the anode AN between turns, as the resistance with which the anode gas flows out from a turn and flows (takes a short cut) into an adjacent turn via an anode gas diffusion layer is lower than the resistance with which the anode gas passes through a turn of the anode gas flow channel. That is, it is conceivable that the gas diffusibility of an electrochemical cell 10 may improve because a larger number of turns of an anode gas flow channel having a serpentine shape leads to an increased anode gas amount that is supplied to the anode AN from the anode gas flow channel on the anode separator. For this reason, by employing the divided anode gas flow channel configuration, the anode separator 26 according to the present example for use in an electrochemical hydrogen pump 100 makes it possible to make the number of turns of an anode gas flow channel larger than in a case where such a divided configuration is not employed, thereby bringing about improvement in gas diffusibility of an electrochemical cell 10.

Further, by being provided with the first anode gas supply manifold 32A and the second anode gas supply manifold 32B, the anode separator 26 according to the present example for use in an electrochemical hydrogen pump 100 can be configured to be able to better hold down increases in pressure loss in the anode gas supply manifolds 32 than in a case where one anode gas supply manifold is provided.

Specifically, the electrochemical hydrogen pump 100 increases in pressure loss in the anode gas supply manifolds 32 as the number of electrochemical cells 10 that are stacked increases. This may impair uniformity in the supplied amounts of anode gas that are distributed separately to each of the electrochemical cells 10 and cause an imbalance in the supplied amounts of anode gas across the electrochemical cells 10. Moreover, the imbalance in the supplied amounts of anode gas across the electrochemical cells 10 invites a lack of anode gas supply in the electrochemical cells 10, thereby contributing to a deterioration in efficiency of hydrogen compression operation of the electrochemical hydrogen pump 100.

Note here that since, according to the aforementioned configuration, a plurality of the anode gas supply manifolds 32 are provided, increases in pressure loss in the anode gas supply manifolds 32 are held down, and a deterioration in efficiency of hydrogen compression operation of the electrochemical hydrogen pump 100 is reduced.

Further, by making the total of the opening area of the first anode gas supply manifold 32A and the opening area of the second anode gas supply manifold 32B larger than the opening area of one anode gas discharge manifold 36, the anode separator 26 according to the present example for use in an electrochemical hydrogen pump 100 can be configured to be able to better hold down increases in pressure loss in the anode gas supply manifolds 32 than in a case where the total of the opening area of the first anode gas supply manifold 32A and the opening area of the second anode gas supply manifold 32B is equal to or smaller than the opening area of one anode gas discharge manifold 36.

This allows the anode separator 26 for use in an electrochemical hydrogen pump 100 to further improve efficiency in hydrogen compression operation of the electrochemical hydrogen pump 100 than has conventionally been the case. Specifically, the deteriorated uniformity in the supplied amounts of anode gas that are distributed separately to each of the electrochemical cells 10, which is caused by increases in pressure loss in the anode gas supply manifolds 32, can be reduced. This brings about improvement in a lack of anode gas supply in each of the electrochemical cells 10, thereby reducing a deterioration in efficiency of hydrogen compression operation of the electrochemical hydrogen pump 100. It should be noted that in a case where the anode gas supply apparatus is used to supply the anode gas to the anode gas supply manifolds 32, the rise in power consumption of the anode gas supply apparatus caused by the increases in pressure loss in the anode gas supply manifolds 32 can be suppressed too.

Further, by being configured such that the first anode gas flow channel, which is connected to the first anode gas supply manifold 32A, and the second anode gas flow channel, which is connected to the second anode gas supply manifold 32B, are connected to the anode gas discharge manifold 36 without intersecting each other, the anode separator 26 according to the present example for use in an electrochemical hydrogen pump 100 can make the flow channel lengths of the anode gas flow channels shorter than in a case where one anode gas flow channel is laid within the anode separator 26. This makes it possible to reduce pressure losses in the anode gas flow channels. Further, even in a case where either of the first and second anode gas flow channels suffers from flow channel clogging (flooding) due to water, the anode gas can continue to be supplied to the other flow channel.

Further, when the anode gas passes through an anode gas flow channel in the opposite electrode section G of the anode separator 26, an electrochemical reaction of the electrochemical cell 10 causes the anode gas to migrate from the anode AN to the cathode CA. For this reason, the flow rate of the anode gas in the anode gas flow channel decreases as the anode gas migrates from upstream to downstream through the anode gas flow channel. Then, in a case where the flow channel cross-sectional area of an upstream side of the anode gas flow channel and the flow channel cross-sectional area of a downstream side of the anode gas flow channel are equal, the gas pressure of the anode gas flow channel is lower downstream than upstream. This causes a drop in supply pressure of the gas from the anode gas flow channel to the anode AN downstream of the anode gas flow channel, making it hard for the anode gas to be supplied to the anode AN. Moreover, such a phenomenon invites a lack of anode gas supply downstream of the anode gas flow channel of the electrochemical cell 10, thereby contributing to a deterioration in efficiency of hydrogen compression operation of the electrochemical hydrogen pump 100.

However, the anode separator 26 according to the present example for use in an electrochemical hydrogen pump 100 can be configured to be able to appropriately maintain the gas pressure of an anode gas flow channel, as causing a plurality of flow channels to merge into a decreased number of flow channels downstream of the anode gas flow channel makes the flow channel cross-sectional area of a downstream side of the anode gas flow channel smaller than the flow channel cross-sectional area of an upstream side of the anode gas flow channel.

Further, by being configured such that the serpentine shapes of the first and second serpentine flow channels 34A and 34B are linearly symmetrical with respect to the center line CL, the anode separator 26 according to the present example for use in an electrochemical hydrogen pump 100 can more uniformly supply the anode gas to the anode AN in the opposite electrode section G of the anode separator than in a case where the serpentine shapes are asymmetrical with respect to the center line CL.

Further, since the anode separator 26 according to the present example for use in an electrochemical hydrogen pump 100 is configured such that either of the first and second anode gas flow channels start its serpentine shape after having come close to the center line CL or both of the first and second anode gas flow channels start their serpentine shapes after having come close to the center line CL, dead spaces in which no anode gas flow channels are laid can be reduced in the opposite electrode section G of the anode separator 26 near the center line CL. This makes it possible to more uniformly supply the anode gas to the anode AN.

Further, by employing a configuration in which either of the first and second anode gas flow channels comes close to the center line CL or both of the first and second anode gas flow channels come close to the center line CL, the first anode gas supply manifold 32A and the second anode gas supply manifold 32B can be appropriately separated from each other. This makes it easy to place a seal member in a circular pattern on the outer periphery of each of the first and second anode gas supply manifolds 32A and 32B of the anode separator 26 according to the present example for use in an electrochemical hydrogen pump 100 as indicated by dot-and-dash lines in Fig. 3A, thus making it easy to improve the gas sealability of the first and second anode gas supply manifolds 32A and 32B.

The anode separator 26 according to the present example for use in an electrochemical hydrogen pump 100 may be the same as the anode separator 26 according to the embodiment for use in an electrochemical hydrogen pump 100 except for the aforementioned features.

Further, it is obvious to persons skilled in the art from the above description that there are many improvements to the present disclosure and other embodiments of the present disclosure. Accordingly, the above description should be interpreted as illustrative, and is provided for the purpose of teaching persons skilled in the art the best mode of carrying out the present disclosure. The details of a structure and/or a function of the present disclosure can be substantially changed without departing from the spirit of the present disclosure.

### Industrial Applicability

An aspect of the present disclosure is applicable to an anode separator for use in an electrochemical hydrogen pump that makes it possible to further improve efficiency in hydrogen compression operation of the electrochemical hydrogen pump than has conventionally been the case.

### Reference Signs List

10 electrochemical cell
11 feeding plate
12 feeding plate
13 insulating plate
14 insulating plate
15 end plate
16 end plate
17 fastener
21 electrolyte membrane
22 cathode feeder
23 cathode catalyst layer
24 anode catalyst layer
25 anode feeder
26 anode separator
27 cathode separator
28 insulator
30 anode gas lead-in flow channel
31 anode gas supply flow channel
32 anode gas supply manifold
32A first anode gas supply manifold
32B second anode gas supply manifold
33 anode gas supply communicating path
33A first anode gas supply communicating path
33B second anode gas supply communicating path
34 serpentine flow channel
34A first serpentine flow channel
34B second serpentine flow channel
35 anode gas emission communicating path
35A first anode gas emission communicating path
35B second anode gas emission communicating path
36 anode gas discharge manifold
37 anode gas emission flow channel
38 anode gas lead-out flow channel
40 cathode gas lead-out flow channel
45 O-ring
50 voltage applier
100 electrochemical hydrogen pump
200L first region
200R second region
300 direction of anode gas
AN anode
CA cathode
CL center line
G opposite electrode section
INA anode inlet
INB anode inlet
L1 flow channel width
L2 flow channel depth
W amplitude

## Claims

1. An anode separator made of metal for use in an electrochemical hydrogen pump, the anode separator comprising:
a first anode gas flow channel having a serpentine shape;
a second anode gas flow channel having a serpentine shape; and
an anode gas discharge manifold into which an anode gas discharged from each of the first anode gas flow channel and the second anode gas flow channel flow,
wherein the first anode gas flow channel and the second anode gas flow channel are provided in a first region and a second region, respectively, that are divided from each other by a predetermined line parallel to a direction of the anode gas that flows into the anode gas discharge manifold.

2. The anode separator according to claim 1, further comprising:
a first anode gas supply manifold through which the anode gas that flows into the first anode gas flow channel flows; and
a second anode gas supply manifold through which the anode gas that flows into the second anode gas flow channel flows.

3. The anode separator according to claim 2, wherein a first anode inlet of the first anode gas flow channel and a second anode inlet of the second anode gas flow channel are adjacent to each other.

4. The anode separator according to claim 2, wherein a total of an opening area of the first anode gas supply manifold and an opening area of the second anode gas supply manifold is larger than an opening area of the anode gas discharge manifold.

5. The anode separator according to any one of claims 1 to 4, wherein the first anode gas flow channel and the second anode gas flow channel are connected to the anode gas discharge manifold without intersecting each other.

6. The anode separator according to any one of claims 1 to 5, wherein the first anode gas flow channel and the second anode gas flow channel both become greater in amplitude of their serpentine shapes as they extend inward from their respective anode inlets and become smaller in amplitude of their serpentine shapes as they extend outward toward their respective anode outlets.

7. The anode separator according to any one of claims 1 to 6, wherein
the first anode gas flow channel includes a plurality of flow channels, and
the plurality of flow channels merge downstream into a decreased number of flow channels.

8. The anode separator according to any one of claims 1 to 7, wherein
the second anode gas flow channel includes a plurality of flow channels, and
the plurality of flow channels merge downstream into a decreased number of flow channels.

9. The anode separator according to any one of claims 2 to 4, wherein the predetermined line is a line connecting a midpoint between the first anode gas supply manifold and the second anode gas supply manifold with a center of the anode gas discharge manifold.

10. The anode separator according to any one of claims 1 to 9, wherein the serpentine shapes are linearly symmetrical with respect to the predetermined line.

11. The anode separator according to any one of claims 2 to 4, wherein the first anode gas flow channel linearly extends from the first anode gas supply manifold, then bends toward the line connecting the midpoint between the first anode gas supply manifold and the second anode gas supply manifold with the center of the anode gas discharge manifold, then bends toward the anode gas discharge manifold, and then starts the serpentine shape of the first anode gas flow channel.

12. The anode separator according to any one of claims 2 to 4, wherein the second anode gas flow channel linearly extends from the second anode gas supply manifold, then bends toward the line connecting the midpoint between the first anode gas supply manifold and the second anode gas supply manifold with the center of the anode gas discharge manifold, then bends toward the anode gas discharge manifold, and then starts the serpentine shape of the second anode gas flow channel.

13. The anode separator according to any one of claims 1 to 12, wherein a ratio of a flow channel depth of the first anode gas flow channel to a flow channel width of the first anode gas flow channel and a ratio of a flow channel depth of the second anode gas flow channel to a flow channel width of the second anode gas flow channel are both equal to or less than 0.5.

14. An electrochemical hydrogen pump comprising:
an electrolyte membrane;
an anode provided on a first principal surface of the electrolyte membrane;
a cathode provided on a second principal surface of the electrolyte membrane;
the anode separator according to any one of claims 1 to 13 provided on the anode; and
a voltage applier that applies a voltage between the anode and the cathode,
wherein the electrochemical hydrogen pump causes, by using the voltage applier to apply a voltage, protons taken out from an anode gas supplied onto the anode to move to the cathode via the electrolyte membrane and produces compressed hydrogen.
